# EUROPEAN PATENT APPLICATION

(11) **EP 2 293 555 A2**
(43) Date of publication of application: **09.03.2011**
(21) Application number: 10156494.6
(22) Date of filing: 15.03.2010
(51) Int. Cl.: H04N 7/01

(54) **Image processing apparatus and image motion estimating method**

(30) Priority: 25.08.2009 KR 20090078638
(71) Applicant: SAMSUNG ELECTRONICS CO., LTD., Suwon-si Gyeonggi-do 442-742 (KR)
(72) Inventor: Han, Seung-hoon, Seoul (KR)
(74) Representative: Clark, David James

(57) **Abstract**

An image processing apparatus is provided, which includes an image buffer which stores therein images that are input consecutively; and a controller which estimates a motion by using a reference block that is formed on the basis of a current frame image, and a search area including image data on one of an even line and an odd line of a frame image adjacent to the current frame image and image data on an interpolated remaining line.

## Description

### BACKGROUND

### Field

Apparatuses and methods consistent with the present general inventive concept relate to an image processing apparatus and an image motion estimating method, and more particularly, to an image processing apparatus which processes a film image and an image motion estimating method.

### Description of the Related Art

A film image is generated 24 frames per second (fps), and a TV image is processed 25 or 30 fps. The film image uses a progressive scanning in which each scene is stored on film and scanned on a screen, each frame scanned in sequence, one frame at a time. Meanwhile, the TV image is transmitted by an interlaced scanning in which a single frame is divided into two fields and scanned alternately to efficiently transmit images through limited scanning lines. National Television System Committee (NTSC) method, which is used in Korea, the U.S.A., Japan, etc., processes an image at 60 fields per second while Phase Alternation Line (PAL) or Sequential Couleur A Memoire (SECAM), which is used in Europe, etc., processes an image at 50 fields per second.

Film images and TV images have different number of screens per second. If the film images are played at the rate of 24 fps TV screen, viewers watch a movie with faster motion. Thus, to make the film images consistent with the TV screen rate, a pull-down process, which generates 60 fields from 24 fps, is required. Typically, 3:2 pull-down process, which scans 3 fields from a first frame image out of two frame images and scans 2 fields from the remaining single frame image, is used.

However, as for the pull-down film image, a motion judder occurs, a moving image is not displayed smoothly, and a motion estimation which is essentially accompanied by a frame rate conversion or a motion compensation is not performed accurately.

### SUMMARY

One or more exemplary embodiments provides an image processing apparatus including: an image buffer which stores images therein that are input consecutively; and a controller which estimates a motion of the input images by using a reference block that is formed on the basis of a current frame image, and a search area comprising image data on one of an even line and an odd line of a frame image adjacent to the current frame image and image data on an interpolated, remaining line.

If the input images may include an interlaced type image, the controller forms a reference block by combining an even field image and an odd field image which are pulled down from an identical original frame.

The controller may store one of a previous field image of a previous frame image relative to the current frame image and a next field image of a next frame image relative to the current frame image, and may interpolate the image data of the remaining line that is not stored by using one of an odd line or an even line of the reference block and the stored field image.

The controller may store one of a previous field image of a previous frame image relative to the current frame image and a next frame image of a next frame image relative to the current frame image, and may interpolate the image data of the remaining line that is not stored by using one of an odd line or an even line of the current frame image and the stored field image.

The controller may store one of a previous field image of a previous frame image relative to the current frame image and a next field image a next frame image relative to of the current frame image, and may interpolate the image data of the remaining line that is not stored by using the stored field image.

If a plurality of identical frame images are input, the controller may form a reference block by combining an even line of a first of two identical frame images and an odd line of a second of the two identical frame images.

The controller may store one of an odd line and a n even li n e of a previous or ne x t frame image distinguished from the plurality of identical frame images, and may interpolate the image data of the remaining line that is not stored by using one of the odd line and the even line of the reference block and the stored line.

The controller may include a memory which stores therein one of the even line and the odd line of the frame image adjacent to the current frame image.

The controller may interpolate the image data of the remaining line by using a mean filter or a median filter.

One or more exemplary embodiments provide a method of estimating a motion of an image, the method including: forming a reference block based on a current frame image; storing a field image comprising one of an even line and an odd line of a frame image adjacent to the current frame image, as a search area; interpolating image data on a remaining line; and estimating a motion by using the reference block and the search area comprising the interpolated image data.

If the image may include an interlaced type image, the forming the reference block comprises combining an even field image and an odd field image which are pulled down from an identical original frame.

The storing the field image as the search area may include storing one of a previous field image of a previous frame image relative to the current frame image and a next field image of a next frame image relative to the current frame image, and the interpolating the image data of the remaining line that is not stored may include using one of an odd line and an even line of the reference block and the stored field image.

If a plurality of identical frame images is input, the forming the reference block may include combining an even line of a first of two identical frame images, and an odd line of a second of the two identical images.

the storing the field image as the search area may include storing one of an odd line and an even line of a previous or next field image which is distinguished from the plurality of identical frame images, and the interpolating the image data on the remaining line may include using one of an odd line and an even line of the reference block and the stored line.

The interpolating the image data comprises interpolating the image data on the remaining line by using a mean filter or a median filter.

One or more exemplary embodiments provide an image processing apparatus including: an image buffer which stores therein a progressive type image which is input consecutively; a controller which forms a reference block based on a first frame image, forms a scan block based on a second frame image which is input before or after the first frame image is input, and estimates a motion of the reference block according to a matching error between the reference block and the scan block, and one of an even line and an odd line of the scan block comprising one of an even line and an odd line of the second frame image, and a remaining line of the scan block being formed by an interpolation of the first frame image and the second frame image.

One or more exemplary embodiments provide a motion estimating method of a progressive type image including: forming a reference block based on a first frame image; forming a scan block based on a second frame image which is input before or after the first frame image is input; estimating a motion of the reference block according to a matching error between the reference block and the scan block; and one of an even line and an odd line of the scan block comprising one of an even line and an odd line of the second frame image, and the remaining line of the scan block being formed by an interpolation of the first frame image and the second frame image.

### BRIEF DESCRIPTION OF THE DRAWINGS

The above and/or other aspects of the present invention will become apparent and more readily appreciated from the following description of the exemplary embodiments, taken in conjunction with the accompanying drawings of which:

FIG. 1 is a control block diagram of an image processing apparatus according to an exemplary embodiment;

FIG. 2 illustrates an image describing a motion estimating method of the image processing apparatus in FIG. 1 according to the exemplary embodiment;

FIG. 3 illustrates an image desribing a motion estimating method of the image processing apparatus in FIG. 1 according to another exemplary embodiment;

FIG. 4 is a control flowchart which describes a motion estimating method if an interlaced type image is input to the image processing apparatus in FIG. 1;

FIG. 5 illustrates an image to describe a motion estimating method of the image processing apparatus in FIG. 1 according to still another exemplary embodiment; and

FIG. 6 is a control flowchart which describes a motion estimating method if a progressive type image is input to the image processing apparatus in FIG. 1.

### DETAILED DESCRIPTION OF EXEMPLARY EMBODIMENTS

Hereinafter, exemplary embodiments of the present invention will be described with reference to accompanying drawings, wherein like numerals refer to like elements and repetitive descriptions will be avoided as necessary. The inventive concept may be embodied in various forms without being limited to the exemplary embodiments set forth herein.

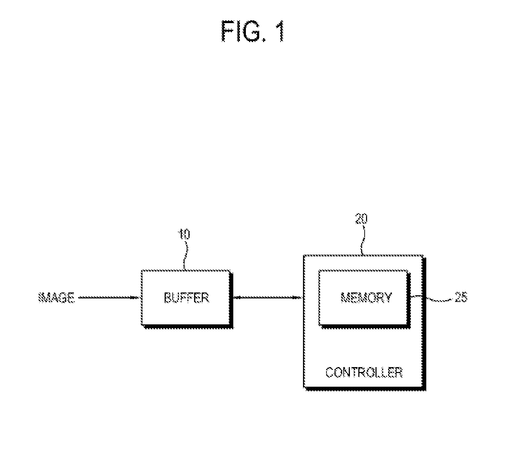

FIG. 1 is a control block diagram of an image processing apparatus according to an exemplary embodiment of the present invention.

As shown therein, an image processing apparatus includes a buffer 10 which stores therein images that are input consecutively, and a controller 20 which estimates a motion through an image in the buffer 10.

The image which is input to the buffer 10 may include a frame image or a field image. The field image is a screen image which is processed by an interlaced scanning and includes even lines or odd lines, while the frame image is a screen image which is processed by a progressive scanning and includes both even and odd lines. The frame image according to the present exemplary embodiment is not only a screen image input by the progressive scanning but may also be an image which is generated by a combination of two field images. The buffer 10 stores at least three field images therein.

The controller 20 estimates a motion of an image based on the image stored in the buffer 10, and converts a frame rate or interpolates an image through the motion estimation. Among methods of estimating a motion, a block matching algorithm divides a current screen image into several reference blocks, compares each reference block with several other blocks within a predetermined search area of a previous or next screen image and finds a most similar matching block in the previous or next screen image. A degree of similarity of the matching block is determined on the basis of a mean absolute difference (MAD), a mean squared difference (MWD), a normalized cross correlation function (NCCF), etc. Based on the calculated similarity, a position of the matching block with respect to the reference block is determined to be a motion vector. In the block matching algorithm, a larger search area increases a calculation volume, a memory bandwidth and an internal memory capacity, thereby causing more burden to hardware.

A motion of a pull-down film image may be estimated accurately by using four field images, i.e., two frame images. However, a memory capacity increases in response to the size of the image, which is a search area. If the motion is estimated by using two fields in consideration of the memory capacity, the estimation operation is performed in a field image including only even lines or in a field image including only odd lines, instead of in a single frame image. Thus, accuracy of the motion estimating operation deteriorates and an error is very likely to occur. For example, if a motion estimating operation is performed by using only two fields, errors in motion estimation increase in an aliasing area.

To address the foregoing issue, the controller 20 estimates a motion by using a reference block which is formed on the basis of a current frame image, and a search area including image data on one of an even line and an odd line of a frame image adjacent to the current frame image and the other interpolated line. That is, the controller 20 uses less capacity of the memory 25 by storing an image corresponding to a single field image, and estimates a motion by using a frame image after interpolating an image corresponding to a remaining field image. As the motion estimation is performed in a frame image instead of the field image, accuracy of the estimation operation improves, and the storage space may be saved. Memory 25 is a computer-readable media, which includes magnetic media such as hard disks, floppy disks, and magnetic tape; optical media such as CD ROM disks and DVD; magneto-optical media such as optical disks; and hardware devices that are specially configured to store and perform program instructions, such as read-only memory (ROM), random access memory (RAM), flash memory, and the like.

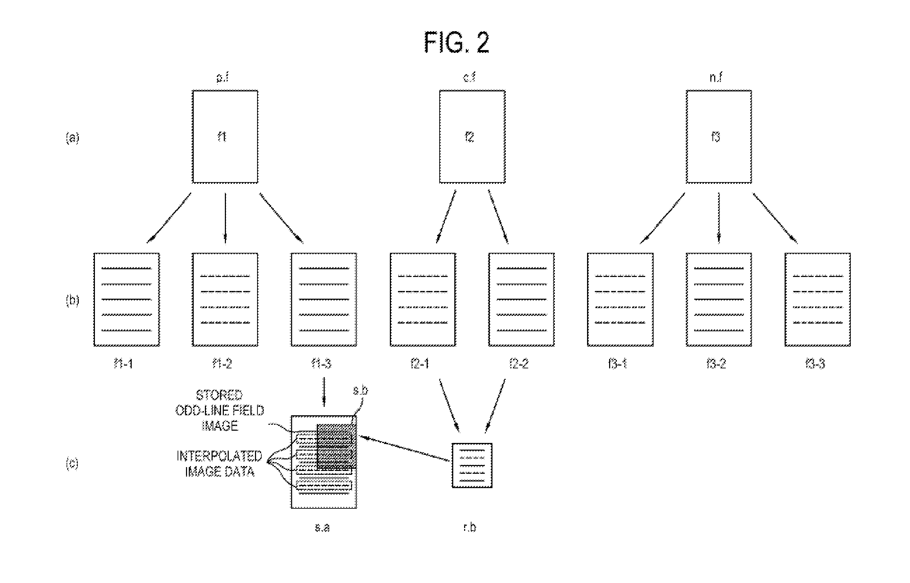

FIGS. 2 to 4 illustrate a motion estimating method depending on an input image. For example, FIG. 2 illustrates a motion estimating method according to the exemplary embodiment of the image processing apparatus shown in FIG. 1. An image which is input to the buffer 10 includes an interlaced type film image. As described above, the film image is generated at the rate of 24 or 25 fps, and is converted into 60 or 50 fields per second to be consistent with the TV frame rate. Section (a) of FIG. 2 illustrates original frame images f1, f2 and f3 of the film image. For purposes of convenience, the first frame image f1 is named as a previous frame image p.f, the second frame image f2 is named as a current frame image c.f, and the third frame image f3 is named as a next frame image n.f. Original frame images f1, f2 and f3 of the film image as in section (a) are pulled down to field images including only odd lines or even lines as in section (b). The first frame image f1 is pulled down and input as a first field image f1-1 and a third field image f1-3 including odd lines, and a second field image f1-2 including even lines. The second frame image f2 is pulled down and input as two field images such as a first field image f2-1 including even lines and a second field image f2-2 including odd lines. Consecutive frame images are repeatedly input as three field images or two field images, and an odd field image including odd lines and an even field image including even lines are alternately repeated. For example, the third frame image f3 is pulled down and input as a first field image f3-1 and a third field image f3-3 including even lines, and a second field image f3-2 including odd lines.

The controller 20 combines the first images f2-1 and the second field image f2-2 which are pulled down from the current frame image c.f to thereby form a reference block r.b. The reference block r.b corresponds to a progressive type image which is generated from a single original frame image.

The controller 20 stores one of a previous field image and a next field image of the current frame image c.f in the memory 25 to form a search area s.a in which the reference block r.b is scanned. That is, if the reference block r.b is extracted from the second frame image f2, the third field image f1-3 input before the second frame image f2 or the first field image f3-1 input after the second frame image f2 may be stored as the search area s.a. The third field image f1-3 is generated from the previous frame image p.f and the first field image f3-1 is generated from the next frame image n.f. The third field image f1-3 and the first field image f3-1 correspond to images adjacent to the current frame image c.f. According to the present exemplary embodiment, the controller 20 stores the third field image f1-3, which includes odd lines, which is pulled down from the previous frame image p.f, as the search area s.a.

The controller 20 interpolates image data corresponding to a remaining line that is not stored, e.g., an even line. As the image data are interpolated, the search area s.a is generated as a progressive type image to include both the odd line and the even line like the reference block r.b. The image data may be generated by using one of the odd line and the even line (i.e., whichever is the remaining line) of the reference block r.b. and the stored field image f1-3, or generated by using one of the odd line and the even line (i.e., whichever is the remaining line) of the current frame image c.f and the stored field image f1-3. Otherwise, the image data may be interpolated by repeating the odd line of the stored field image f1-3 or by using only the odd line of the stored field image f1-3. Interpolation of image data may be performed by various known methods, and is not limited to a particular method. The controller 20 may interpolate image data by using a mean filter or a median filter. The controller 20 calculates a matching error by comparing a plurality of scan blocks s.b within the search area s.a including the interpolated image data, and the reference block r.b, and determines a motion vector based on the calculation result. Interpolation of the image data within the search area s.a and calculation of the matching error in the search area s.a are performed at substantially the same time. That is, the controller 20 first stores a part of the search area s.a, and then performs interpolation of the remaining part of the search area s.a and calculates the matching error at the same time.

The present exemplary embodiment has been explained by using a 3:2 pull-down film image as an example, and may also apply to a 2:2 pull-down interlaced type film image.

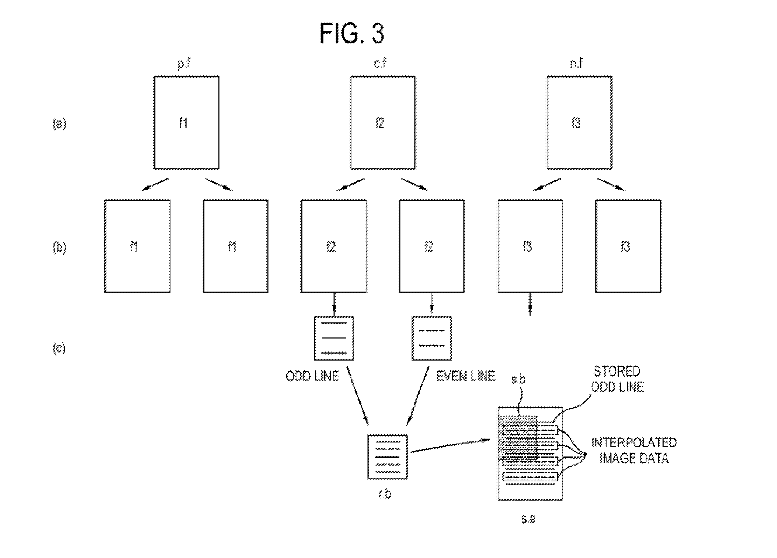

FIG. 3 illustrates a motion estimating method of the image processing apparatus in FIG. 1 according to another exemplary embodiment of the present invention. FIG. 3 relates to a film image similar to that of section (a) in FIG. 1. According to the present exemplary embodiment, however, an input image includes identical frame images shown in section (b) which are repeated to correspond to a particular frame rate, instead of a pull-down field image. A first frame image f1 corresponding to a previous frame image p.f, a second frame image f2 corresponding to a current frame image c.f and a third frame image f3 corresponding to a next frame image n.f are input two times each. For example, to display a 25 Hz film image at 50 Hz, the identical frame images may be repeatedly input two times.

The controller 20 forms a reference block r.b by combining an even line of one of the two current frame images c.f and an odd line of the other current frame image c.f, as shown in section (c). This is the same as the algorithm of the exemplary embodiment in FIG. 2 in which the reference block r.b is formed by extracting an image from different lines of images input consecutively. The controller 20 may otherwise extract the reference block r.b from one of the two frame images f2.

The controller 20 stores one of an odd line and an even line of a plurality of identical frame images, i.e., a previous or next frame image distinguished from the current frame image c.f. As shown in FIG. 3, the controller 20 according to the present exemplary embodiment extracts and stores an odd line from the next frame image n.f and forms the search area s.a by interpolating image data on the even line, as shown in section (c). The method of interpolating image data may vary according to the methods mentioned above in conjunction with the exemplary embodiment in FIG. 2 and is not limited to a particular method.

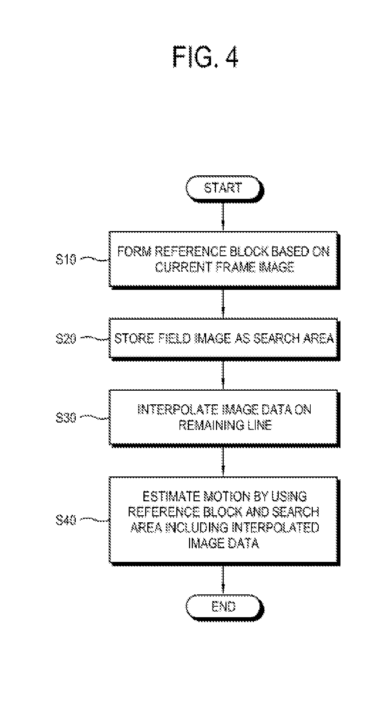

FIG. 4 is a control flowchart which describes a motion estimating method according to the exemplary embodiment of the image processing apparatus shown in FIG. 1. With reference to FIG. 4, a motion estimating method for an interlaced type image is as follows.

First, the controller 20 forms the reference block r.b based on the current frame image c.f (S10). If an input image includes an interlaced type film image, the controller 20 forms the reference block r.b by combining an even field image and an odd field image which are pulled down from the identical original frame (see e.g., FIG. 2). If a plurality of identical frame images is input, the controller 20 forms a reference block r.b by combining an even line of one of two identical frame images and an odd line of the other frame image (see e.g., FIG. 3).

Then, the controller 20 stores the field image including one of an even line and an odd line of a frame image adjacent to the current frame image c.f, as the search area s.a (S20). The storage of the search area s.a includes loading an image from the buffer 10 to the memory 25 of the controller 20 to estimate a motion. The larger the loaded image is, the more the capacity of memory is used.

The controller 20 interpolates image data on the unstored, remaining line (S30). The image data may be interpolated by using only a part of the stored field image and the current frame image c.f, a part of the stored field image and the reference block r.b., or only the stored field image.

The controller 20 estimates a motion by using the reference block r.b and the search area s.a including the interpolated image data (S40). The motion estimation includes a determination of a motion vector according to a block matching between the reference block r.b and a scan block s.b within the search area s.a. The scan block s.b which has the least matching error with the reference block r.b among a plurality of scan blocks is set as the matching block, and a vector between the reference block r.b and the matching block is set as a motion vector. The controller 2 0 ma y perform various control operations including conversion of a frame rate by generating an interpolation image between images, prevention of a motion judder or improvement of a motion of an image through a motion vector.

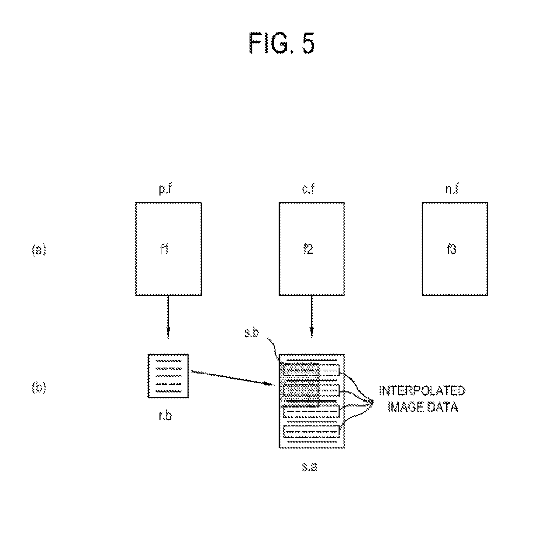

FIG. 5 illustrates a motion estimating method according to another exemplary embodiment of the image processing apparatus in FIG. 1. Frame images as in section (a) are input consecutively. According to the present exemplary embodiment, the type of an image is not limited to a film image. That is, the present exemplary embodiment may apply as long as an input image is a frame image including both an even line and an odd line according to a particular frame rate.

The controller 20 extracts the reference block r.b from the previous frame image p.f and stores the field image including only the even line or the odd line from the current frame image c.f, which is input after the previous frame image p.f, as the search area s.a, as shown in section (b). The controller 20 then interpolates the image data on the unstored, remaining line and searches for the matching block that matches with the reference block r.b.

The number of pixels in the reference block r.b and the search area s.a, i.e., the size of the image, is typically predetermined, and the size of the reference block r.b and the search area s.a in the drawings are provided for purposes of convenience only, and is not limited thereto.

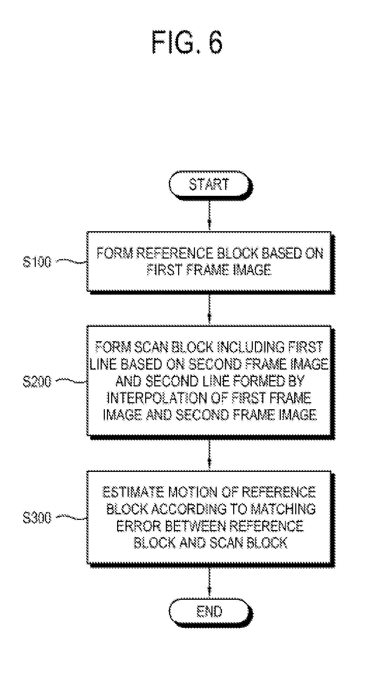

FIG. 6 is a control flowchart which describes a motion estimating method if the progressive type image is input as in FIG. 5.

The controller 20 forms the reference block r.b based on a particular input frame, the first frame image (S100). As the first frame image is input by the progressive scanning, the reference block r.b may be extracted without an additional calculation or combination.

The scan block s.b is formed on the basis of the first frame image, and the second frame image which corresponds to the previous or next frame image input consecutively to the first frame image (S200). That is, the first line corresponding to one of the odd line and the even line of the search area s.a includes one of the odd line and the even line of the second frame, and the second line corresponding to the other line is interpolated on the basis of the first frame image and the second frame image. The other line which is interpolated may be calculated by various known methods.

As the unstored line of the search area s.a is interpolated, the matching error between the reference block r.b and the scan block s.b within the search area s.a is calculated, and the motion of the reference block r.b is estimated according to the matching error (S300).

Although a few exemplary embodiments of the present invention have been shown and described, it will be appreciated by those skilled in the art that changes may be made in these exemplary embodiments without departing from the principles and spirit of the invention, the scope of which is defined in the appended claims and their equivalents.

## Claims

1. An image processing apparatus comprising:
an image buffer which stores therein images that are input consecutively; and
a controller which estimates a motion by using a reference block that is formed on the basis of a current frame image, and a search area comprising image data on one of an even line and an odd line of a frame image adjacent to the current frame image and image data on an interpolated remaining line.

2. The image processing apparatus according to claim 1, wherein if the input image comprises an interlaced type image, the controller forms a reference block by combining an even field image and an odd field image which are pulled down from an identical original frame.

3. The image processing apparatus according to claim 2, wherein the controller stores one of a previous field image of a previous frame image and a next field image of a next frame image, and interpolates the image data on the remaining line by using one of an odd line or an even line of the reference block and the stored field image.

4. The image processing apparatus according to claim 2, wherein the controller stores one of a previous field image of a previous frame image and a next frame image of a next frame image, and interpolates the image data on the remaining line by using one of an odd line or an even line of the current frame image and the stored field image.

5. The image processing apparatus according to claim 2, wherein the controller stores one of a previous field image of a previous frame image and a next field image of a next frame image, and interpolates the image data on the remaining line by using the stored field image.

6. The image processing apparatus according to claim 1, wherein if a plurality of identical frame images is input, the controller forms a reference block by combining an even line of one of two identical frame images and an odd line of a remaining identical frame image.

7. The image processing apparatus according to claim 6, wherein the controller stores one of an odd line and an even line of a previous or next frame image distinguished from the plurality of identical frame images, and interpolates the image data on the remaining line by using one of the odd line and the even line of the reference block and the stored line.

8. The image processing apparatus according to claim 1, wherein the controller comprises a memory which stores therein one of the even line and the odd line of the frame image adjacent to the current frame image.

9. The image processing apparatus according to claim 1, wherein the controller interpolates the image data on the remaining line by using a mean filter or a median filter.

10. A method of estimating a motion of an image, the method comprising:
forming a reference block based on a current frame image;
storing a field image comprising one of an even line and an odd line of a frame image adjacent to the current frame image, as a search area;
interpolating image data on a remaining line; and
estimating a motion by using the reference block and the search area comprising the interpolated image data.

11. The method according to claim 10, wherein if the image comprises an interlaced type image, the forming the reference block comprises combining an even field image and an odd field image which are pulled down from an identical original frame.

12. The method according to claim 11, wherein the storing the field image as the search area comprises storing one of a previous field image of a previous frame image and a next frame image of a next frame image, and the interpolating the image data on the remaining line comprises using one of an odd line and an even line of the reference block and the stored field image.

13. The method according to claim 10, wherein if a plurality of identical frame images is input, the forming the reference block comprises combining an even line of one of the two identical frame images, and an odd line of the other identical frame image.

14. The method according to claim 13, wherein the storing the field image as the search area comprises storing one of an odd line and an even line of a previous or next field image which is distinguished from the plurality of identical frame images, and the interpolating the image data on the remaining line comprises using one of an odd line and an even line of the reference block and the stored line.

15. The method according to claim 10, wherein the interpolating the image data on the remaining line comprises interpolating the image data by using a mean filter or a median filter.
